(19) Europäisches Patentamt
European Patent Office
Office européen des brevets

(11) Veröffentlichungsnummer: **0 364 891 B1**

(12) **EUROPÄISCHE PATENTSCHRIFT**

(45) Veröffentlichungstag der Patentschrift: **09.06.93**

(51) Int. Cl.$^5$: **C08G 69/32**

(21) Anmeldenummer: **89119036.5**

(22) Anmeldetag: **13.10.89**

# (54) Vollaromatische Polyamide, Verfahren zu ihrer Herstellung und daraus geformte Gebilde.

(30) Priorität: **18.10.88 DE 3835405**

(43) Veröffentlichungstag der Anmeldung:
**25.04.90 Patentblatt 90/17**

(45) Bekanntmachung des Hinweises auf die Patenterteilung:
**09.06.93 Patentblatt 93/23**

(84) Benannte Vertragsstaaten:
**AT BE CH DE FR GB IT LI LU NL**

(56) Entgegenhaltungen:
**EP-A- 0 199 090**
**EP-A- 0 303 949**
**CH-A- 631 472**
**DE-A- 2 556 883**
**DE-A- 3 007 063**

(73) Patentinhaber: **HOECHST AKTIENGESELL-SCHAFT**
**Postfach 80 03 20**
**W-6230 Frankfurt am Main 80(DE)**

(72) Erfinder: **Keil, Günter, Dr.**
**Frankfurter Strasse 60**
**W-6238 Hofheim am Taunus(DE)**
Erfinder: **Heinrich, Karl**
**Karwendelstrasse 2**
**W-8934 Grossaitingen(DE)**
Erfinder: **Klein, Peter, Dr.**
**Fasanenweg 13**
**W-6200 Wiesbaden(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

Die Erfindung betrifft neue, vollaromatische Polyamide des Dicarbonsäure-Diamin-Typs, die aus ihren Lösungen in organischen Lösemitteln versponnen werden können sowie daraus hergestellte geformte Gebilde wie Fäden, Fasern, Faserpulp, Filme, Folien und Membrane mit sehr hohem Anfangsmodul (Elastizitätsmodul) sowie Verfahren zu ihrer Herstellung.

Aromatische Polyamide (Polyaramide) sind bekanntlich Rohstoffe von hoher thermischer und chemischer Stabilität sowie geringer Brennbarkeit. So zeigen beispielsweise Fasern und Folien aus solchen Rohstoffen sehr gute mechanische Eigenschaften, wie hohe Festigkeit und hohen Anfangsmodul (Elastizitätsmodul) und sind für technische Einsatzgebiete gut geeignet - beispielsweise zur Verstärkung von Kunststoffen oder als Filtermaterialien.

Die Herstellung der dafür benötigten Polymere erfolgt am günstigsten in bekannter Weise durch Umsetzung von aromatischen Diaminen mit aromatischen Dicarbonsäuredichloriden in aprotischen organischen Lösungsmitteln vom Amid-Typ (N,N-Dimethylacetamid, N-Methylpyrrolidon, N,N,N',N'-Tetramethylharnstoff und dgl.) - gegebenenfalls in Gegenwart von Calcium- oder Lithiumhalogeniden- und Neutralisation des gebildeten Chlorwasserstoffs, beispielsweise mit Calciumoxid.

Polyaramide mit hoher Festigkeit und hohem Anfangsmodul sind solche, bei denen die Amidbindungen an den aromatischen Kernen koaxial oder nahezu parallel zueinander orientiert sind, wodurch starre, stäbchenförmige Polymermoleküle entstehen.

Ein typisches Polyamid dieser Art ist beispielsweise Poly(p-phenylenterephthalamid). Fäden aus diesem Material sind beispielsweise in der Deutschen Patentschrift 22 19 703 beschrieben.

Dieses Polyamid weist eine Reihe von Vorzügen auf, seine Herstellung und seine Verarbeitung sind jedoch sehr schwierig. Wegen der schlechten Löslichkeit in polaren organischen Lösungsmitteln - und zwar auch in Gegenwart von anorganischen Salzen wie Calciumchlorid oder Lithiumchlorid als Lösungsvermittler - fällt dieses Polymer kurz nach seiner Bildung bereits aus dem Reaktionsmedium aus. Es muß isoliert, gewaschen, getrocknet und dann erneut in einem Spinnlösungsmittel gelöst werden. Bevorzugtes Lösungsmittel zur Herstellung der Spinnlösungen ist konzentrierte Schwefelsäure, was besondere Probleme bei der Handhabung (Arbeitssicherheit, Korrosion) und Abfallbeseitigung verursacht.

Es wurde daher versucht, diese Schwierigkeiten dadurch zu umgehen, daß Copolyamide entwickelt wurden, welche eine gute Löslichkeit in den bekannten Amid-Lösungsmitteln haben, die sich auch gut verspinnen lassen und deren Filamente sich nach Verstreckung durch hohe Festigkeitswerte und Anfangsmoduli auszeichnen.

So wurde beispielsweise in der DE-A-21 44 126 die Herstellung von löslichen aromatischen Polyamiden mit hohem Elastizitätsmodul beschrieben, wonach substituierte 3-(p-Aminophenoxy)-4-aminobenzanilide mit Terephthaloylchlorid gut lösliche Polyamide liefern, welche sich zu Filamenten von guten Festigkeiten und Anfangsmoduli verspinnen und verstrecken lassen.

Die erhöhte Löslichkeit wird hier durch die meta-Orientierung und das Sauerstoffbrückenatom verursacht.

In der Deutschen Patentschrift 25 56 883 und in der Deutschen Offenlegungsschrift 30 07 063 werden Copolyamide aus Terephthalsäure, p-Phenylendiamin und 3,4'-Diaminodiphenylether beschrieben, die in Amid-Lösungsmitteln isotrope Lösungen liefern, die sich gut verspinnen lassen. Die Filamente erlangen durch eine sehr hohe Verstreckung hohe Festigkeiten und Moduli. Nachteilig bei den beiden vorgenannten Verfahren ist, daß die benötigten unsymmetrischen Diamine nur in sehr aufwendigen Verfahren hergestellt und gereinigt werden können.

Aus diesem Grund werden in DOS 35 10 655 und 36 05 394, bzw. in EPA 0 199 090 Terephthalamide mit 3 Diaminkomponenten in bestimmten, definierten Anteilen beschrieben, die in Amid-Lösungsmitteln gut löslich sind und durch Verformung Fäden oder Folien mit sehr guten Festigkeiten und Moduli liefern.

Wegen des Gehaltes an nicht aromatischen Kettenbestandteilen, wie -O- oder -$CH_2$-Gruppen sind die in den letztgenannten Schriften beschriebenen Moduli - in der DOS 35 10 655 werden bis zu 68 N/tex, in der DOS 36 05 394 bis zu 79 N/tex genannt - für bestimmte Anwendungszwecke noch nicht ausreichend hoch.

Fäden aus dem oben erwähnten, in der deutschen Patentschrift 22 19 703 beschriebenen Poly-(p-phenylenterephthalamid) erlangen erst nach einer aufwendigen thermischen Nachbehandlung Moduli bis 99 N/tex (vgl. auch USP 37 67 756, Spalte 11 bzw. DPS 22 19 703, Seite 14).

Der vorliegenden Erfindung liegt daher die Aufgabe zugrunde, solche aromatischen Copolyamide zu finden, die sich unter Verwendung von Amidlösungsmitteln in geformte Gebilde überführen lassen, die sich dann durch eine Reihe von physikalischen Eigenschaften auszeichnen. Bei der Herstellung von Fäden und Fasern sollen nach entsprechenden Verstreckungsvorgängen insbesondere hohe Festigkeiten und sehr hohe Anfangsmoduli erzielbar sein. Die für die Herstellung der Copolyamide benötigten Monomere sollen

leicht zugänglich sein, die durch die Polykondensation erhaltenen Polymerlösungen sollen nach einem Filtrationsprozeß und einer entsprechenden Entgasung direkt spinnbar bzw. formbar sein.

Es gelang, neuartige aromatische Copolyamide zu finden, die überwiegend aus para-substituierten aromatischen Kettenbestandteilen bestehen und überraschenderweise trotzdem in Amid-Lösungsmitteln löslich sind und die sich aus diesen Lösungen zu geformten Gebilden wie Fäden, Fasern, Faserpulp und Folien verarbeiten lassen. Diese Copolyamide weisen zu mindestens 95 Mol-%, vorzugsweise zu 100 Mol-% die folgenden wiederkehrenden - ausschließlich starren - Struktureinheiten:

A = -OC-Ar-CO-

B = -HN-Ar′-NH-

C =

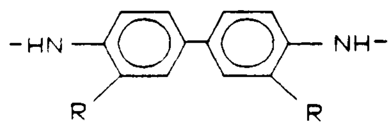

D =

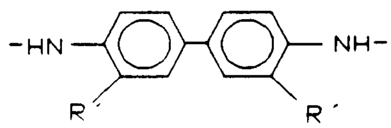

und bis zu 5 Mol-% m-Bindungen enthaltende, von aromatischen Dicarbonsäuren (E′) und/oder von aromatischen Diaminen (F′) abgeleitete Struktureinheiten E und/oder F auf, wobei die Summe der Molanteile der Struktureinheiten A + E und die Summe der Molanteile der Struktureinheiten B + C + D + F im wesentlichen gleich groß sind.

In diesen Formeln bedeuten

-Ar- und -Ar'- zweiwertige aromatische Reste, deren Valenzbindungen in para- oder Vergleichbarer koaxialer oder paralleler Stellung stehen und die durch einen oder zwei inerte Reste, wie Niederalkyl oder Halogen substituiert sein können

-R einen Alkylrest mit 1 bis 4 Kohlenstoffatomen, und

-R' einen Alkoxyrest mit 1 bis 4 Kohlenstoffatomen.

Die Valenzbindungen, die in koaxialer oder paralleler Stellung stehen, sind entgegengesetzt gerichtet. Ein Beispiel für koaxiale, entgegengesetzt gerichtete Bindungen sind die Diphenyl-4,4'-Bindungen. Ein Beispiel für parallele, entgegengesetzt gerichtete Bindungen sind z.B. die Naphthalin-1,5- oder -2,6-Bindungen, während die Naphthalin-1,8-Bindungen parallel gleichgerichtet sind.

Für -Ar- stehende zweiwertige aromatische Reste, bei denen die Valenzbindungen in para- oder Vergleichbarer koaxialer oder paralleler Stellung stehen, sind ein- oder zweikernige kondensierte aromatische Reste wie z.B. Phenylen-1,4, Naphthylen-1,4, Naphthylen-1,5, Naphthylen-2,6 und 1,4-Diphenylen.

Für -Ar'- stehende zweiwertige aromatische Reste, bei denen die Valenzbindungen in para- oder vergleichbarer koaxialer oder paralleler Stellung stehen sind ein- oder zweikernige kondensierte aromatische Reste wie z.B. Phenylen-1,4, Naphthylen-1,4, Naphthylen-1,5 und Naphthylen-2,6. Bevorzugt für -Ar- und -Ar'- ist Phenylen-1,4.

Die Reste -Ar- und -Ar'- können ein- oder zweifach durch Niederalkylreste, das sind geradkettige oder verzweigte Alkylreste mit 1 bis 4 C-Atomen, oder durch Halogen, insbesondere durch F, Cl oder Br substituiert sein. Bevorzugte Alkylsubstituenten sind geradkettig und insbesondere kommen Methyl und Ethyl in Betracht. Bevorzugter Halogensubstituent ist Chlor.

Die erfindungsgemäßen Polyamide können die unsubstituierten Reste -Ar- und -Ar'- und die alkyl- und/oder halogensubstituierten Reste -Ar- und -Ar'- nebeneinander in wechselnden Anteilen enthalten.

Dabei kann das Polyamid eine Art oder mehrere Arten substituierter Reste -Ar- und -Ar'- enthalten; z.B. kann es ausschließlich methylsubstituierte -Ar- und/oder -Ar'-Reste oder es kann Anteile von -Ar- und/oder -Ar'-Resten mit verschiedenen Alkylsubstituenten und/oder mit Halogensubstituenten enthalten.

Die erfindungsgemäßen Polyamide können aber auch ausschließlich unsubstituierte oder substituierte Reste -Ar- und -Ar'- enthalten. Aus Kostengründen sind solche erfindungsgemäßen Polyamide bevorzugt, die nur unsubstituierte oder die bis zu ca. 30 Mol-% substituierte Reste-Ar- und -Ar'- enthalten.

Niedere Alkylreste und niedere Alkoxyreste, für die -R und R' stehen können, sind ebenfalls geradkettig oder verzweigt und haben 1-4 C-Atome. Bevorzugt stehen R und R' für geradkettige Reste und insbesondere für Reste mit 1-2 C-Atomen. Besonders bevorzugt stehen R und R' für Methyl und Methoxy.

Insbesondere steht R für Methyl, R' für Methoxy.

Die aus den in das Polyamid einkondensierten Diaminen stammenden Struktureinheiten B, C und D sind in den erfindungsgemäßen aromatischen Polyamiden nur in den folgenden bestimmten Molprozentbereichen, bezogen auf die Gesamtmenge der Komponenten B, C und D, enthalten:

| | | |
|---|---|---|
| Struktureinheit | B: 20-30 Mol-%, | vorzugsweise 25-30 Mol-%, |
| " | C: 35-55 Mol-%, | vorzugsweise 40-50 Mol-%, |
| " | D: 15-40 Mol-%, | vorzugsweise 25-30 Mol-%. |

Dabei beziehen sich diese Mol-%-Angaben auf die Gesamtmenge der Diamin-Struktureinheiten B, C und D.

Neben den Struktureinheiten mit paraständigen oder vergleichbaren, koaxial oder parallel entgegengesetzt gerichteten Bindungen können die erfindungsgemäßen Polyamide bis zu 5 Mol-%, bezogen auf alle Struktureinheiten m-Bindungen enthaltende Struktureinheiten E und F aufweisen.

m-Bindungen enthaltende Struktureinheiten E und F im Sinne der vorliegenden Erfindung sind solche, die einen aromatischen Kern enthalten, dessen in der Kette des Polymermoleküls liegende Bindungen zueinander in m-Stellung stehen.

Solche Struktureinheiten sind z.B. die Reste von Isophthalsäure, m-Phenylendiamin, 3,4'-Diaminodiphenyl oder deren Alkyl- und/oder Alkoxysubstitutionsprodukten, oder 3,4'- oder 3',4-Diaminobenzanilid.

Es ist für den Fachmann selbstverständlich, daß die Summe aller von aromatischen Säuren abgeleiteten Struktureinheiten (A + E) und die Summe aller von aromatischen Aminen abgeleiteten Struktureinheiten (B + C + D + F) im wesentlichen gleich sind, d.h., daß sie sich maximal um ca. 1 %, vorzugsweise maximal um 0,2 %, unterscheiden, insbesondere im Rahmen der praktischen Meß- und Dosierungsmöglichkeiten gleich sind.

Die erfindungsgemäßen aromatischen Polyamide sind in organischen aprotischen polaren Lösungsmitteln löslich und lassen sich aus diesen Lösungen direkt zu geformten Gebilden verarbeiten.

Die dabei erhaltenen Gebilde zeichnen sich durch eine Kombination sehr guter technologischer Eigenschaften aus.

Diese, in Verbindung mit der Löslichkeit in organischen Lösemitteln und der daraus resultierenden ökonomisch und ökologisch vorteilhaften Verarbeitungsmöglichkeit, stellt eine überaus wertvolle Bereicherung der Technik auf dem Gebiet vollaromatischer Polyamide dar.

Die ausgezeichneten technologischen Eigenschaften der erfindungsgemäßen geformten Gebilde beruhen auf dem Einbau der Aminbausteine B, C und D innerhalb der oben angegebenen Grenzen. Wie aus den weiter unten beschriebenen Vergleichsversuchen ersichtlich ist, fallen die technologischen Eigenschaften außerhalb der angegebenen Grenzen stark ab.

Aus der zitierten Literatur (DOS 35 10 655) ergibt sich, daß Co-terephthalamide aus 50 % p-Phenylendiamin + 50 % 3,3'-Dimethylbenzidin, sowie aus 50 % p-Phenylendiamin und 50 % 3,3'-Dimethoxybenzidin in Aramidlösungsmitteln schwer löslich und nicht spinnbar sind (Vergleichsversuche 1 und 4).

Aromatische Polyaramide mit einzelnen der Aminkomponenten B, C und D sind allgemein bekannt.

So ist bekannt, Terephthalsäure- und p-Phenylendiamin-Reste für Polyamide einzusetzen, z.B. aus der oben zitierten deutschen Patentschrift 22 19 703. Diese Produkte sind in Amid-Lösungsmitteln praktisch nicht mehr löslich.

Die Verwendung von Benzidinen ist ebenfalls bekannt. So wird in der oben zitierten deutschen Offenlegungsschrift Nr 35 10 655, Vergleichsbeispiel 6, gezeigt, daß ein Terephthalamid von 3,3'-Dimethylbenzidin in Amidlösungsmitteln unlöslich und somit nicht spinnbar ist.

Ebenfalls zitiert ist die Verwendung von 3,3'-Dimethylbenzidin zur Herstellung von Aramiden in folgenden Druckschriften:

DPS 30 07 063, Seite 5, Zeile 25,
Vysokomol. Soed. 12 (1970), Nr. 10, S. 2185,
USP 33 18 849,
Belg. Pat. 569 760,

USP 36 71 542,
USP 37 67 756,
P.W. Morgan: "Condensation Polymers", Intersci. Publ. 1965, Seite 180; Japanische Kokai Tokkyo Koho JP 55/71751(80/71751) zit. CA 93 (16), 151120k und Japanische Kokai JP 50/154522(75/154522) zit. CA 84 (16), 106885s.

Der Einsatz von 3,3′-Dimethoxybenzidin wird beispielsweise beschrieben in
DE-A 19 29 713,
J. Polym. Sci. B2, 369 (1964),
U.S.-PS-36 71 542,
Japanische Kokai Tokkyo Koho JP 55/71751(80/71751) zit. CA 93 (16), 151120k.

Wie sich aus den genannten Schriften ergibt, sind die betreffenden Polyamide in Amidlösungsmitteln meist unlöslich, oder aber die aus organischen Lösungsmitteln gesponnenen Filamente weisen nur mäßige Eigenschaften auf.

Dagegen sind die Polyamide der vorliegenden Erfindung, die durch Verwendung von Gemischen der Aminkomponenten B + C + D in bestimmten Anteilen hergestellt wurden, überraschenderweise in Amid-Lösungsmitteln löslich und daraus ersponnene Filamente weisen hohe Festigkeit und einen sehr hohen Anfangsmodul auf.

Die Herstellung der erfindungsgemäßen aromatischen Polyamide erfolgt durch Lösungskondensation von aromatischen Dicarbonsäuredichloriden mit dazu äquivalenten Mengen von Mischungen aus aromatischen Diaminen in bekannten Polyamid-Lösemitteln, d.h. in aprotischen, polaren Lösungsmitteln vom Amidtyp, wie z.B. in N,N-Dimethylacetamid, Tetramethylharnstoff oder insbesondere in N-Methyl-2-pyrrolidon. Gegebenenfalls können diesen Lösungsmitteln in bekannter Weise zur Erhöhung der Lösefähigkeit bzw. zur Stabilisierung der Polyamidlösungen Halogenidsalze der ersten und zweiten Gruppe des periodischen Systems zugegebenen werden. Bevorzugte Zusätze sind Calciumchlorid und/oder Lithiumchlorid.

Diese Salzzugabe kann vor der Polykondensation oder vorteilhaft unmittelbar nach der Zugabe des Säurechlorids erfolgen.

Die Polykondensationstemperaturen liegen üblicherweise zwischen -20 °C und +120 °C, bevorzugt zwischen +10 °C und +100 °C. Besonders gute Ergebnisse werden bei Reaktionstemperaturen zwischen +10 °C und +80 °C erzielt. Die Polykondensationsreaktionen werden vorzugsweise so ausgeführt, daß nach Abschluß der Reaktion 2 bis 15, vorzugsweise 5 bis 10 Gew.-% an Polykondensat in der Lösung vorliegen. Besonders gute Ergebnisse werden bei Konzentrationen von 5,0 bis 7,5 Gew.-% erzielt.

Im Verlauf der Polykondensation wächst das Molekulargewicht des Polymers und damit auch die Viskosität des Reaktionsansatzes an.

Eine ausreichende Molekül-Kettenlänge ist erreicht, wenn die Viskosität der bei der Polykondensation erhaltenen Polymerlösung einer inhärenten Viskosität des Polymers von ca. 5,0 bis 9,0 dl/g entspricht.

Unter inhärenter Viskosität wird der Ausdruck

$$\eta_{inh} = \frac{\ln \eta_{rel}}{c}$$

verstanden.

$\eta_{rel}$ bedeutet dabei die relative Viskosität, c die angewandte Konzentration in g/100 ml.

Sie wurde für die Zwecke der vorliegenden Erfindung bestimmt an Lösungen von jeweils 0,5 g Polymer in 100 ml 98-Gew.%iger Schwefelsäure bei 25 °C.

Das skizzierte, an sich bekannte Verfahren zur Herstellung von aromatischen Polyamiden ist, soweit es zur Herstellung der oben beschriebenen erfindungsgemäßen aromatischen Polyamide dient, ebenfalls Gegenstand der Erfindung. Dieses erfindungsgemäße Verfahren ist dadurch gekennzeichnet, daß man 95 bis 100 Mol-% Säurechloride der Formel

Cl-OC-Ar-CO-Cl (A′)

und 0 bis 5 Mol-% von m-Bindungen enthaltenden Dichloriden aromatischer Dicarbonsäuren (E′) mit einer äquivalenten Menge einer Diaminmischung, die sich zusammensetzt aus 95-100 Mol-% eines Gemisches von Diaminen, bestehend aus
20-30 Mol-%, vorzugsweise 25-30 Mol-%, Diaminen der Formel

$NH_2$-Ar′-$NH_2$ (B′)

35-55 Mol-%, vorzugsweise 40-50 Mol-% Diaminen der Formel

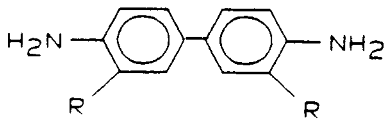

(C′)

und

15-40 Mol-%, vorzugsweise 25-30 Mol-% Diaminen der Formel

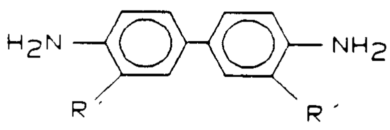

(D′)

und aus 0 bis 5 Mol-% von m-Bindungen enthaltenden aromatischen Diaminen (F′) in der angegebenen Weise umsetzt.

m-Bindungen enthaltende aromatische Dicarbonsäuredichloride und aromatische Diamine im Sinne der vorliegenden Erfindung sind solche, bei denen die Richtungen der Bindungen der beiden Carbonsäurechloridgruppen bzw. der beiden Aminogruppen miteinander einen Winkel bilden, der dem von m-Bindungen entspricht. Solche Dicarbonsäure-dichloride bzw. Diamine sind z.B. Isophthalsäure-dichlorid, m-Phenylendiamin, 3,4′-Diaminodiphenyl oder deren Alkyl- und/oder Alkoxysubstitutionsprodukte, oder 3,4′- oder 3′,4-Diaminobenzanilid.

Bei dieser Arbeitsweise bleiben die erhaltenen erfindungsgemäßen Polyamide im Lösungsmittel gelöst.

Wenn die Polymerlösung die zur Weiterverarbeitung erforderliche Viskosität erreicht hat, kann die Polykondensation in üblicher Weise durch Zugabe von monofunktionellen Verbindungen, wie z.B. Acetylchlorid gestoppt werden. Anschließend wird der entstandene und locker an das Amidlösungsmittel gebundene Chlorwasserstoff neutralisiert durch Zugabe basischer Substanzen. Geeignet sind dafür beispielsweise Lithiumhydroxyd, Calciumhydroxyd, insbesondere aber Calciumoxid.

Zur Herstellung von geformten Gebilden aus den erfindungsgemäßen Polyamiden werden die erhaltenen neutralisierten Lösungen der erfindungsgemäßen Polyamide filtriert, entgast und in bekannter Weise zu Fäden, Fasern, Faserpulp, Filmen oder auch Folien und Membranen, die ebenfalls ein Gegenstand der Erfindung sind, weiterverarbeitet. Dies kann beispielsweise durch Einsatz einer Naßspinnanlage erfolgen, wo die Polymerlösung durch geeignete Düsen in ein Fällbad ausgepreßt wird, die erhaltenen Fäden durch Waschbäder gezogen und bei höherer Temperatur verstreckt werden. Als Fällbäder eignen sich wäßrige Lösungen des gleichen Amidlösungsmittels, das auch zur Polymerherstellung Verwendung gefunden hat. Es sind aber auch wäßrige Salzlösungen wie z.B. Calciumchloridlösungen verwendbar.

Beim Extrudieren der Polymerlösungen und beim Abzug der geformten Gebilde wie Filamente oder Folien aus dem Fällbad tritt nur eine relativ geringe Naßverstreckung dieser Gebilde ein. Die aus den Fällbädern abgezogenen Gebilde müssen daher nach dem üblichen Waschen und Trocknen einer weiteren Verstreckung unterzogen werden, um ihnen die gewünschten mechanischen Eigenschaften, wie hohen Elastizitätsmodul und hohe Reißfestigkeit, zu vermitteln.

Bei der Herstellung der erfindungsgemäßen Fäden und Fasern sowie Folien setzt sich demnach die Gesamtverstreckung zusammen aus einer geringen Naßverstreckung und einer anschließenden höheren Verstreckung. Diese wird in der Regel in üblicher Weise bei erhöhter Temperatur auf Streckwerken ausgeführt, in denen zwischen mit unterschiedlicher Umfangsgeschwindigkeit laufenden Galetten eine ein- oder mehrstufige Verstreckung erfolgt.

Um die Filamente auf die erforderliche Verstrecktemperatur zu erwärmen kann eine Kontaktverstrekkung durchgeführt werden, wobei die Filamente über im Streckbereich des Streckwerkes angebrachte heiße Platten ("Bügeleisen") gezogen werden, die Oberflächentemperaturen von 280 °C bis 460 °C, bevorzugt 340 °C bis 450 °C aufweisen. Die Filamente werden dabei im Verhältnis 1:4,8 bis ca. 1:15, bevorzugt 1:5 bis 1:13 verstreckt.

Eine ebenfalls geeignete Variante des Spinnverfahrens ist das sog. "Trockendüsen-Naßspinnverfahren", wie es beispielsweise in der US-A-34 14 645 beschrieben ist. Dort wird von oben nach unten gesponnen und die Spinnfäden passieren nach dem Austritt aus der Düse zunächst ein gasförmiges Medium, vorzugsweise Luft, und treten danach in ein wäßriges Koagulationsbad ein. Die weitere Behandlung der so erzeugten Fäden erfolgt wie oben beschrieben. Die aus den erfindungsgemäßen Rohstoffen hergestellten Formkörper, wie z.B. Fasern, Filamente, Faserpulp oder Folien, dienen beispielsweise als Verstärkungsmaterialien für Kunststoffe bzw. als technische Materialien für Filtration und Isolation. Für Isolationszwecke ist es auch möglich, eine Polymerlösung auf den zu isolierenden Körper als Film aufzutragen und dann das Lösungsmittel und gegebenenfalls anwesende Lösungsvermittler zu entfernen.

Zur weiteren Verdeutlichung der Erfindung sollen die nachfolgenden Beispiele dienen. Die Anteile an Dicarbonsäurekomponenten und Diaminkomponenten wurden jeweils zu 100 Mol-% berechnet.

**Beispiel 1**

Aromatisches Copolyamid aus 100 Mol-% Terephthaloylchlorid, 50 Mol-% 3,3′-Dimethylbenzidin, 25 Mol-% p-Phenylendiamin und 25 Mol-% 3,3′-Dimethoxybenzidin, 5-prozentige Polymerlösung.
233,5 g (1,1 Mol) 3,3′-Dimethylbenzidin,
59,5 g (0,55 Mol) p-Phenylendiamin,
134,2 g (0,55 Mol) 3,3′-Dimethoxybenzidin und
66,5 g Lithiumchlorid werden unter Stickstoff gelöst in
13233 g N-Methylpyrrolidon und zwischen 30 und 55 °C umgesetzt mit 446,6 g (2,2 Mol) gepulvertem Terephthaloylchlorid. Nach 50 Minuten Reaktionszeit wird die Polykondensation gestoppt durch Zugabe einer Lösung von 3,4 g Acetylchlorid in ca. 100 g N-Methylpyrrolidon. Der sehr zähe Ansatz wird 15 Minuten lang bei ca. 60 °C nachgerührt und mit 132,4 g Calciumoxid (96 %ig) in Form einer 65-prozentigen Suspension in N-Methylpyrrolidon neutralisiert.

Die Lösung enthält 5 % Copolyamid, 1,7 % Calziumchlorid und 0,5 % Lithiumchlorid. Das gelöste Copolyamid hat eine inhärente Viskosität von 6,26.

Die Lösung wird filtriert, entgast und nach dem sogenannten Trockendüsen-Naßspinnverfahren versponnen. Dazu wird sie bei einer Temperatur von 90 °C durch eine senkrecht in einem Abstand von 30 mm über einem Fällbad angebrachte Düse mit 100 Öffnungen von je 0,15 mm Durchmesser in ein Fällbad, bestehend aus einer wäßrigen, 35-prozentigen Lösung von N-Methylpyrrolidon in Wasser von 80 °C mit einer Geschwindigkeit von 16 m/min ausgesponnen. Die erhaltenen Spinnfäden werden durch zwei Wasserbäder, eine mehrstufige Waschmaschine, über 3 Trockengaletten von 120 °C, 160 °C und 240 °C und schließlich über ein 4-teiliges Bügeleisen (Kontaktheizer) von 360 °C, 370 °C, 380 °C und 400 °C mit einer Geschwindigkeit von 85,7 m/min abgezogen.

Das Multifilamentgarn wird hier und in den folgenden Beispielen mit einem Schutzdrall entsprechend $\alpha m$ = 30 (DIN 53 832, Teil 1) versehen und anschließend geprüft. Bei diesem Beispiel beträgt der Einzelfilamenttiter 1,77 dtex (DIN 53 830), die feinheitsbezogene Höchstzugkraft beträgt 185 cN/tex bei einer Höchstzugkraftdehnung von 2,1 % (DIN 53 834, Teil 1). Der Modul ist 94 N/tex. Der Modul wird aus der Steigung des feinheitsbezogenen Kraft-Dehnungs-Diagramms zwischen 0,3 und 0,5 % Dehnung errechnet.

Wird anstelle von p-Phenylendiamin die äquivalente Menge 2-Methyl-1,4-diaminobenzol eingesetzt und im übrigen wie oben beschrieben gearbeitet, so erhält man ebenfalls ein Fasermaterial, das bei verringerter aber noch ausreichender Feinheitsfestigkeit einen sehr guten Anfangsmodul von 83 N/tex aufweist.

**Beispiel 2**

Aromatisches Copolyamid aus 100 Mol-% Terephthaloylchlorid, 50 Mol-% 3,3′-Dimethylbenzidin, 25 Mol-% p-Phenylendiamin und 25 Mol-% 3,3′-Dimethoxybenzidin, 6-prozentige Polymerlösung. 254,8 g (1,2 Mol) 3,3′-Dimethylbenzidin,
64,9 g (0,6 Mol) p-Phenylendiamin,
146,6 g (0,6 Mol) 3,3-Dimethoxybenzidin und
90,7 g wasserfreies Calziumchlorid werden unter Stickstoff gelöst in 11825 g N-Methylpyrrolidon.

Innerhalb von 60 Minuten werden bei Temperaturen zwischen 29,6 und 57,3 °C 490,2 g gepulvertes Terephthaloylchlorid zugegeben. Nach 60 Minuten wird die Polykondensation durch Zugabe von 3,8 g Acetylchlorid - verdünnt mit ca. 100 g N-Methylpyrrolidon - gestoppt. Man rührt 10 Minuten bei ca. 60 °C nach und neutralisiert mit 223 g einer 65-prozentigen Suspension von 96-prozentigem Calziumoxid in N-Methylpyrrolidon.

Die Lösung enthält 6 % Copolyamid und 2,7 % Calziumchlorid. Das Copolyamid hat eine inhärente Viskosität von 7,75. Die Lösung wird filtriert, entgast und nach einem Trockendüsen-Naßspinnverfahren versponnen (vgl. Beispiel 1).

Temperatur der Spinnlösung: 120 °C
Abstand Düse-Fällbad: 20 mm
Düse: 100 Öffnungen mit je 0,15 mm Durchmesser
Fällbad: 35 % N-Methylpyrrolidon/Wasser von 80 °C
Abzugsgeschwindigkeit: 16 m/min
Trockengaletten: 120, 160, 240 °C
Bügeleisentemperatur: 450 °C
Abzugsgeschwindigkeit: 120 m/min.

Der Einzelfilamenttiter beträgt 1,81 dtex, die Feinheits-Festigkeit beträgt 156 cN/tex, die Dehnung 1,9 % und der Anfangsmodul 89 N/tex.

**Beispiel 3**

Aromatisches Copolyamid aus 100 Mol-% Terephthaloylchlorid, 50 Mol-% 3,3′-Dimethylbenzidin, 25 Mol-% p-Phenylendiamin und 25 Mol-% 3,3′-Dimethoxybenzidin, 6,5-prozentige Polymerlösung.

Eine Lösung aus
276,0 g (1,3 Mol) 3,3′-Dimethylbenzidin,
70,3 g (0,65 Mol) p-Phenylendiamin,
158,8 g (0,65 Mol) 3,3′-Dimethoxybenzidin und
120 g wasserfreies Calziumchlorid in
11709 g N-Methylpyrrolidon wird wie in Beispiel 1 und 2 polykondensiert mit 527,85 g (2,6 Mol) gepulvertem Terephthaloylchlorid.

Nach Abstoppen mit 4,1 g Acetylchlorid und Neutralisieren mit 241 g Calziumoxid-Suspension in N-Methylpyrrolidon (65 % CaO) erhält man eine sehr zähe Polymerlösung.

Gehalt an Copolymer: 6,5 %
Gehalt an Calziumchlorid: 3,15 %
Inhärente Viskosität des Copolyamids: 6,86 $\frac{dl}{g}$ .

Die Lösung wird filtriert und entgast. Der Trockendüsen-Naßspinnprozeß erfolgt unter folgenden Bedingungen:

Temperatur der Spinnlösung: 110 °C
Abstand Düse-Fällbad: 40 mm
Düse: 100 Öffnungen mit je 0,15 mm Durchmesser
Fällbad: 50 % N-Methylpyrrolidon/Wasser von 60 °C
Abzugsgeschwindigkeit: 16 m/min
Trockengaletten: 120, 160, 240 °C
Bügeleisentemperatur: 400-420 °C
Abzugsgeschwindigkeit: 152,8 m/min.

Der Einzelfilamenttiter beträgt 2,69 dtex, die Feinheits-Festigkeit beträgt 153 cN/tex, die Dehnung 1,9 % und der Anfangsmodul 88 N/tex.

**Beispiel 4**

Aromatisches Copolyamid aus 100 Mol-% Terephthaloylchlorid, 40 Mol-% 3,3′-Dimethylbenzidin, 30 Mol-% p-Phenylendiamin und 30 Mol-% 3,3′-Dimethoxybenzidin. 186,8 g (0,88 Mol) 3,3′-Dimethylbenzidin,
71,3 g (0,66 Mol) p-Phenylendiamin,
161,2 g (0,66 Mol) 3,3′-Dimethoxybenzidin und
70,5 g wasserfreies Calziumchlorid werden gelöst in
13078 g N-Methylpyrrolidon und die Lösung wird zwischen 30,1 °C und 55,3 °C innerhalb von 38 Minuten umgesetzt mit 446,6 g (2,2 Mol) Terephthaloylchlorid.

Gestoppt wird mit 3,5 g Acetylchlorid und neutralisiert mit 204 g Calziumoxid-Suspension (65 % CaO).

Die Lösung enthält 5 % Copolyamid und 2,2 % Calziumchlorid. Die inhärente Viskosität des gelösten Polymers beträgt 8,29. Die filtrierte und entgaste Lösung wird einem Trockendüsen-Naßspinnprozeß unterworfen mit folgenden Bedingungen:

Temperatur der Spinnlösung: 120 °C
Abstand Düse-Fällbad: 40 mm

Düse: 100 Öffnungen mit je 0,15 mm Durchmesser
Fällbad: 35 % N-Methylpyrrolidon/Wasser von 80 ° C
Abzugsgeschwindigkeit: 14 m/min
Trockengaletten: 120, 160, 240 ° C
Bügeleisentemperatur: 400-420 ° C
Abzugsgeschwindigkeit: 180,6 m/min.

Der Einzelfilamenttiter beträgt 1,6 dtex, die Feinheits-Festigkeit beträgt 176 cN/tex, die Dehnung 2,1 % und der Anfangsmodul 91 N/tex.

**Beispiel 5**

Aromatisches Copolyamid aus 100 Mol-% Terephthaloylchlorid, 45 Mol-% 3,3′-Dimethylbenzidin, 25 Mol-% p-Phenylendiamin und 30 Mol-% 3,3′-Dimethoxybenzidin.

Eine Lösung von
248,4 g (1,17 Mol) 3,3′-Dimethylbenzidin,
70,3 g (0,65 Mol) p-Phenylendiamin und
190,5 g (0,78 Mol) 3,3′-Dimethoxybenzidin in
12888 g N-Methylpyrrolidon wird mit
526,3 g gepulvertem Terephthaloylchlorid umgesetzt. Die Polykondensation erfolgt zwischen 30,3 und 54,2 ° C innerhalb von 32 Minuten. Fünf Minuten nach der Säurechlorid-Zugabe werden 84,7 g Calziumchlorid, wasserfrei zugefügt.

Man stoppt die Polykondensation mit 4,1 g Acetylchlorid, läßt zehn Minuten bei ca. 55 ° C nachreagieren und neutralisiert mit 241 g Calziumoxid-Suspension (65 % in N-Methylpyrrolidon).

Die Lösung enthält 6 % Copolyamid und 2,65 % Calziumchlorid. Die inhärente Viskosität des gelösten Polymers beträgt 7,63.

Die filtrierte und entgaste Lösung wird in einem Naßspinnprozeß versponnen. Dazu wird sie aus einer Düse mit 100 Öffnungen von je 0,15 mm Durchmesser in ein waagerecht angeordnetes Koagulationsbad, bestehend aus einer 60 ° C warmen Lösung von 35 % N-Methylpyrrolidon in Wasser mit einer Geschwindigkeit von 16 m/min ausgesponnen. Der Faden durchläuft Waschbäder, Trockengaletten (120 °, 160 ° und 240 ° C) und schließlich ein Bügeleisen mit Temperaturen von 380-410 ° C und wird mit 77,7 m/min abgezogen.

Der Einzelfilamenttiter beträgt 1,99 dtex, die Feinheits-Festigkeit 122 cN/tex, die Dehnung 1,5 % und der Anfangsmodul 85 N/tex.

**Beispiel 6**

Aromatisches Copolyamid aus 85 Mol-% Terephthaloylchlorid, 15 Mol-% Chlorterephthaloylchlorid, 25 Mol-%

p-Phenylendiamin, 60 Mol-% 3,3′-Dimethylbenzidin und 15 Mol-% 3,3′-Dimethoxybenzidin.

101,9 g (0,48 Mol) 3,3′-Dimethylbenzidin,
21,6 g (0,2 Mol) p-Phenylendiamin und
29,3 g (0,12 Mol) 3,3′-Dimethoxybenzidin werden in
3997 g N-Methylpyrrolidon gelöst und bei Temperaturen zwischen 15 ° und 68 ° C innerhalb von 25 Minuten umgesetzt mit einem Gemisch aus 138,05 g Terephthaloylchlorid und 28,5 g Chlorterephthaloylchlorid. Nach einer Stunde Nachrührzeit wird mit 74 g einer Calziumoxid-Suspension (65 % Calziumoxid in N-Methylpyrrolidon neutralisiert.

Die Lösung enthält 6 % Copolyamid und 2,0 % Calziumchlorid. Die inhärente Viskosität des Copolyamids beträgt 5,84.

Die filtrierte und entgaste Lösung wird naß versponnen:
Temperatur der Spinnlösung: 100 ° C
Düse: 100 Öffnungen mit je 0,15 mm Durchmesser
Fällbad: 35 % N-Methylpyrrolidon/Wasser von 80 ° C
Abzugsgeschwindigkeit: 16 m/min
Trockengaletten: 120, 160, 240 ° C
Bügeleisentemperatur: 340 ° -380 ° C
Abzugsgeschwindigkeit: 69,5 m/min.

Der Einzelfilamenttiter beträgt 1,81 dtex, die Feinheits-Festigkeit beträgt 131 cN/tex, die Dehnung 1,7 % und der Anfangsmodul 84 N/tex.

**Beispiel 7**

Aromatisches Copolyamid aus 100 Mol-% Terephthaloylchlorid, 25 Mol-% p-Phenylendiamin, 50 Mol-% 3,3'-Dimethylbenzidin, 15 Mol-% Dimethoxybenzidin und 10 Mol-% 3,4'-Diaminobenzanilid.

Eine Lösung von
17,3 g (0,16 Mol) p-Phenylendiamin,
67,9 g (0,32 Mol) 3,3'-Dimethylbenzidin,
23,45 g (0,096 Mol) 3,3'-Dimethoxybenzidin,
14,5 g (0,064 Mol) 3,4'-Diaminobenzanilid und
20,6 g Calziumchlorid in
3822 g N-Methylpyrrolidon wird innerhalb von 65 Minuten bei Temperaturen zwischen 13,2 und 63 °C umgesetzt mit 130,4 g pulverisiertem Terephthaloylchlorid.

Man neutralisiert mit 59,2 g einer 65-prozentigen CaO-Suspension in N-Methylpyrrolidon.

Die Lösung enthält 5 % Copolyamid und 2,2 % Calziumchlorid. Die inhärente Viskosität des Copolyamids beträgt 5,46.

Die filtrierte und entgaste Lösung wird naß versponnen:
Temperatur der Spinnlösung: 100 °C
Düse: 100 Öffnungen von je 0,15 mm Durchmesser
Fällbad: 35 % N-Methylpyrrolidon/Wasser von 60 °C
Abzugsgeschwindigkeit: 16 m/min
Trockengaletten: 120, 160, 240 °C
Bügeleisentemperatur: 360 °-380 °C
Abzugsgeschwindigkeit: 126,3 m/min.

Der Einzelfilamenttiter beträgt 1,97 dtex, die Feinheits-Festigkeit beträgt 162 cN/tex, die Dehnung 2,3 % und der Anfangsmodul 79 N/tex.

**Vergleichsversuch 1**

Aromatisches Copolyamid aus 100 Mol% Terephthaloylchlorid, 25 Mol% 3,3'-Dimethylbenzidin, 25 Mol% p-Phenylendiamin und 50 Mol% 3,3'-Dimethoxybenzidin.

61,0 g (0,25 Mol) 3,3'-Dimethoxybenzidin,
13,4 g (0,125 Mol) p-Phenylendiamin,
26,5 g (0,125 Mol) 3,3'-Dimethylbenzidin und
16,6 g wasserfreies Calziumchlorid werden gelöst in
3912 g N-Methylpyrrolidon. Zwischen 15,1 ° und 61,3 °C werden innerhalb von 50 Minuten 101,5 g pulverisiertes Terephthaloylchlorid zugegeben. Die Lösung wird mit 30,7 g Calziumoxid (96-prozentig) neutralisiert.

Die Lösung enthält 4 % Copolyamid und 1,8 % Calziumchlorid. Die inhärente Viscosität des gelösten Polymers beträgt 7,43.

Die filtrierte und entgaste Lösung wird in einem Naßspinnprozeß versponnen unter folgenden Bedingungen:
Temperatur der Spinnlösung: 90 °C
Düse: 50 Öffnungen von je 0,15 mm Durchmesser
Fällbad: 35 % N-Methylpyrrolidon/Wasser von 60 °C
Abzugsgeschwindigkeit: 15,9 m/min
Trockengaletten: 160 °C, 180 °C
Bügeleisentemperatur: 300 - 340 °C
Abzugsgeschindigkeit: 60,5 m/min.
Der Einzelfilamenttiter beträgt 2,72 dtex, die Feinheits-Festikeit 108 cN/tex, die Dehnung 2,1 % und der Anfangsmodul 69 N/tex.

**Vergleichsversuch 2**

Aromatisches Copolyamid aus 100 Mol% Terephthaloychlorid, 20 Mol% p-Phenylendiamin, 20 Mol% 3,3'-Dimethylbenzidin und 60 Mol% 3,3'-Dimethoxybenzidin.

7,8 g (0,072 Mol) p-Phenylendiamin,
15,3 g (0,072 Mol) 3,3'-Dimethylbenzidin
52,65 g (0,216 Mol) 3,3'-Dimethoxybenzidin und

24,5 g Lithiumchlorid werden in
2264 g N-Methylpyrrolidon gelöst und bei 10° bis 75°C innerhalb von 50 Minuten umgesetzt mit 74,68 g pulverisiertem Terephthaloychlorid. Neutralisiert wird mit 22,1 g Calziumoxid (96-prozentig).

Die Lösung enthält 5 % Copolyamid, 1,6 % Calziumchlorid und 1,0 % Lithiumchlorid. Die inhärente Viscosität des Copolyamids beträgt 5,30.

Die filtrierte und entgaste Lösung wird einem Naßspinnprozeß unterworfen mit folgenden Bedingungen:
Temperatur der Spinnlösung: 80 °C
Düse: 50 Öffnungen von je 0,10 mm Durchmesser
Fällbad: 35 % N-Methylpyrrolidon/Wasser von 80 °C
Abzugsgeschwindigkeit: 16 m/min
Trockengaletten: 160 °C, 180°C
Bügeleisentemperatur: 330 - 370 °C
Abzugsgeschwindigkeit: 91,7 m/min.

Der Einzelfilamenttiter beträgt 1,86 dtex, die Feinheits-Festigkeit 85 cN/tex, die Dehnung 1,6 % und der Anfangsmodul 65 N/tex.

**Vergleichsversuch 3**

Aromatisches Copolyamid aus 100 Mol% Terephthaloylchlorid, 15 Mol% p-Phenylendiamin, 25 Mol% 3,3'-Diemthylbenzidin und 60 Mol% 3,3'-Dimethoxybenzidin.

Man löst
9,7 g (0,09 Mol) p-Phenylendiamin,
31,8 g (0,15 Mol) 3,3'-Dimethylbenzidin,
87,8 g (0,36 Mol) 3,3'-Dimethoxybenzidin und
20,4 g Calziumchlorid in
3854 g N-Methylpyrrolidon.

Innerhalb von 35 Minuten wird zwischen 13,4 ° und 57 °C mit 121,8 g Terephthaloylchlorid umgesetzt. Neutralisiert wird mit 36,8 g Calziumoxid (96-prozentig).

Die Lösung enthält 5 % Copolymer und 2,1 % Calziumchlorid. Die inhärente Viscosität des Copolyamids beträgt 6,98.

Die filtrierte und entgaste Lösung wird naß versponnen unter folgenden Bedingungen:
Temperatur der Spinnlösung: 90 °C
Düse: 50 Öffnungen von je 0,10 mm Durchmesser
Fällbad: 35 % N-Methylpyrrolidon/Wasser von 60 °C
Abzugsgeschwindigkeit: 16 m/min
Trockengaletten: 160 °, 180 °C
Bügeleisentemperatur: 320 - 360 °C
Abzugsgeschwindigkeit: 55,4 m/min.

Der Einzelfilamenttiter beträgt 2,9 dtex, die Feinheits-Festigkeit 87 cN/tex, die Dehnung 1,8 % und der Modul 63 N/tex.

**Patentansprüche**

**1.** Aromatisches Copolyamid, dadurch gekennzeichnet, daß es zu mindestens 95 Mol% die wiederkehrenden Struktureinheiten der Formeln

A -OC-Ar-CO-
B -HN-Ar'-NH-
C

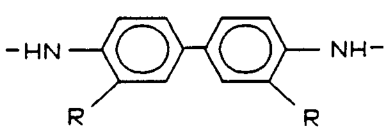

D

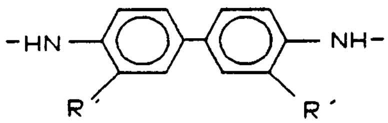

und bis zu 5 Mol% m-Bindungen enthaltende, von aromatischen Dicarbonsäuren (E') und/oder von aromatischen Diaminen (F') abgeleitete Struktureinheiten E und/oder F aufweist, wobei die Summen der Molanteile der Struktureinheiten A + E und der Molanteile der Struktureinheiten B + C + D + F im wesentlichen gleich groß sind,
-Ar- und -Ar'- zweiwertige aromatische Reste sind, deren Valenzbindungen in para- oder vergleichbarer koaxialer oder paralleler Stellung stehen und die durch einen oder zwei inerte Reste, wie Alkyl mit 1 bis 4 Kohlenstoffatomen oder Halogen substituiert sein können,
-R einen Alkylrest mit 1 bis 4 Kohlenstoffatomen,
-R' einen Alkoxyrest mit 1 bis 4 Kohlenstoffatomen,
und die Anteile der Diaminkomponenten B, C und D im Verhältnis zur Gesamtmenge dieser Diaminkomponenten innerhalb folgender Grenzen liegen:

| | |
|---|---|
| Struktureinheit | B: 20-30 Mol-%, |
| " | C: 35-55 Mol-%, |
| " | D: 15-40 Mol-%. |

2. Copolyamide gemäß Anspruch 1, dadurch gekennzeichnet, daß
   -Ar- 1,4-Phenylen, 1,4-, 1,5- oder 2,6-Naphthylen oder 1,4-Diphenylen und
   -Ar'- 1,4 Phenylen, 1,4-, 1,5- oder 2,6-Naphthylen ist.

3. Copolyamide gemäß mindestens einem der Ansprüche 1 und 2, dadurch gekennzeichnet, daß -Ar- und -Ar'-1,4-Phenylenreste sind die unsubstituiert oder durch einen Alkylrest mit 1 bis 4 Kohlenstoffatomen oder ein Halogenatom substituiert sind.

4. Copolyamide gemäß mindestens einem der Ansprüche 1 bis 3, dadurch gekennzeichnet, daß -Ar- und -Ar'-1,4-Phenylenreste sind die unsubstituiert oder durch eine Methylgruppe oder ein Chloratom substituiert sind.

5. Copolyamide gemäß mindestens einem der Ansprüche 1 bis 4, dadurch gekennzeichnet, daß -Ar- und -Ar'-unsubstituierte 1,4-Phenylenreste sind.

6. Copolyamide gemäß mindestens einem der Ansprüche 1 bis 5, dadurch gekennzeichnet, daß
   -R ein Alkylrest mit 1 bis 2 Kohlenstoffatomen, und
   -R' ein Alkoxyrest mit 1 bis 2 Kohlenstoffatomen ist.

7. Copolyamide gemäß mindestens einem der Ansprüche 1 bis 6, dadurch gekennzeichnet, daß -R Methyl und -R' Methoxy ist.

8. Copolyamide gemäß mindestens einem der Ansprüche 1 bis 7, dadurch gekennzeichnet, daß die m-Bindungen enthaltende Struktureinheit der zweiwertige Rest des 3,4'- oder 3',4-Diaminobenzanilids ist.

9. Copolyamide gemäß mindestens einem der Ansprüche 1 bis 8, dadurch gekennzeichnet, daß die Anteile der Diaminkomponenten B, C und D im Verhältnis zur Gesamtmenge an Diaminkomponenten innerhalb folgender Grenzen liegen:
   Diamin B: 25-30 Mol-%
   Diamin C: 40-50 Mol-%
   Diamin D: 25-30 Mol-%

**10.** Verfahren zur Herstellung der aromatische Copolyamide des Anspruchs 1, durch Polykondensation eines Dicarbonsäurechlorids mit aromatischen Diaminen in einem organischen aprotischen polaren Lösungsmittel vom Amidtyp, gegebenenfalls in Gegenwart eines Alkali- oder Erdalkalihalogenids bei erhöhter Temperatur, dadurch gekennzeichnet, daß man 95 bis 100 Mol% Säurechloride der Formel

Cl-OC-Ar-CO-Cl (A')

und 0 bis 5 Mol% von m-Bindungen enthaltenden aromatischen Dicarbonsäure-dichloriden (E') mit einer äquivalenten Menge einer Diaminmischung die sich zusammensetzt aus 95-100 Mol% eines Gemisches von Diaminen, bestehend aus 20-30 Mol% Diaminen der Formel

$NH_2$-Ar'-$NH_2$ (B')

35-55 Mol% Diaminen der Formel

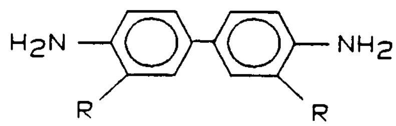

(C´)

und
15-40 Mol-% Diaminen der Formel

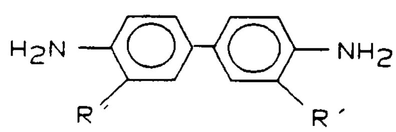

(D´)

und aus 0 bis 5 Mol % von m-Bindungen enthaltenden Diaminen (F′), umsetzt.

**11.** Verfahren gemäß Anspruch 10 dadurch gekennzeichnet, daß man ein Gemisch von Diaminen umsetzt, das die folgende Zusammensetzung aufweist:
25-30 Mol% B′,
40-50 Mol% C′,
25-30 Mol% D′.

**12.** Geformte Gebilde wie Fäden, Fasern, Faserpulp, Folien und Membranen aus aromatischen Copolyamiden des Dicarbonsäure-Diamin-Typs, dadurch gekennzeichnet, daß das geformte Material ein aromatisches Copolyamid des Anspruchs 1 ist.

**Claims**

**1.** An aromatic copolyamide, which comprises at least 95 mol% of recurrent structural units of the formulae

A -OC-Ar-CO-
B -HN-Ar'-NH-
C

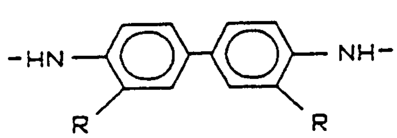

D

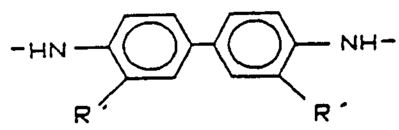

and up to 5 mol% of structural units E and/or F which contain m-bonds and are derived from aromatic dicarboxylic acids (E') and/or from aromatic diamines (F'), the totals of the mol fractions of the structural units A + E and of the mol fractions of the structural units B + C + D + F being substantially the same,
-Ar- and -Ar'- being divalent aromatic radicals, the valency bonds of which are in the para- position or in a comparable coaxial or parallel position and which may be substituted by one or two inert radicals such as alkyl having 1 to 4 carbon atoms or halogen,
-R being an alkyl radical having 1 to 4 carbon atoms,
-R' being an alkoxy radical having 1 to 4 carbon atoms,
and the fractions of the diamine components B, C and D relative to the total quantity of these diamine components being inside the following limits:

structural unit B: 20-30 mol%
" C: 35-55 mol%,
" D: 15-40 mol%.

2. A copolyamide as claimed in claim 1, wherein
-Ar- is 1,4-phenylene, 1,4-, 1,5- or 2,6-naphthylene or 1,4-biphenylenediyl and
-Ar'- is 1,4-phenylene or 1,4-, 1,5- or 2,6-naphthylene.

3. A copolyamide as claimed in at least one of claims 1 and 2, wherein -Ar- and -Ar'- are 1,4-phenylene radicals which are unsubstituted or substituted by an alkyl radical having 1 to 4 carbon atoms or by a halogen atom.

4. A copolyamide as claimed in at least one of claims 1 to 3, wherein -Ar- and -Ar'- are 1,4-phenylene radicals which are unsubstituted or substituted by a methyl group or a chlorine atom.

5. A copolyamide as claimed in at least one of claims 1 to 4, wherein -Ar- and -Ar' - are unsubstituted 1,4-phenylene radicals.

6. A copolyamide as claimed in at least one of claims 1 to 5, wherein
-R is an alkyl radical having 1 or 2 carbon atoms and
-R' is an alkoxy radical having 1 or 2 carbon atoms.

7. A copolyamide as claimed in at least one of claims 1 to 6, wherein -R is methyl and -R' is methoxy.

8. A copolyamide as claimed in at least one of claims 1 to 7, wherein the structural unit containing m-bonds is the divalent radical of 3,4'- or 3',4-diaminobenzanilide.

9. A copolyamide as claimed in at least one of claims 1 to 8, wherein the fractions of the diamine components B, C and D relative to the total quantity of diamine components are inside the following limits:
diamine B: 25-30 mol%
diamine C: 40-50 mol%
diamine D: 25-30 mol%.

10. A process for preparing an aromatic copolyamide of claim 1, by polycondensation of a dicarboxylic acid chloride with aromatic diamines in an organic aprotic polar solvent of the amide type, if necessary

in the presence of an alkali metal halide or alkaline earth metal halide, at an elevated temperature, which comprises reacting 95 to 100 mol% of acid chlorides of the formula

Cl-OC-Ar-CO-Cl (A')

and 0 to 5 mol% of aromatic dicarboxylic acid dichlorides (E') containing m-bonds with an equivalent quantity of a diamine mixture composed of 95-100 mol% of a mixture of diamines containing 20-30 mol% of diamines of the formula

$NH_2$-Ar'-$NH_2$ (B')

35-55 mol% of diamines of the formula

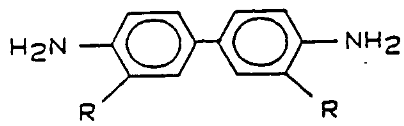

(C')

and 15-40 mol% of diamines of the formula

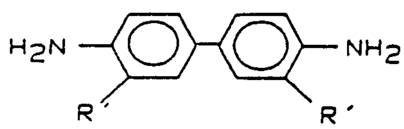

(D')

and 0 to 5 mol% of diamines (F') containing m-bonds.

**11.** The process as claimed in claim 10, wherein a mixture of diamines is reacted which has the following composition:
25-30 mol% of B',
40-50 mol% of C',
25-30 mol% of D'.

**12.** Shaped structures such as filaments, fibers, fiber pulp, films or sheets and membranes of aromatic copolyamides of the dicarboxylic acid/diamine type, wherein the shaped material is an aromatic copolyamide of claim 1.

## Revendications

**1.** Copolyamide aromatique caractérisé en ce qu'il comporte au moins 95 % en moles de motifs récurrents ayant les formules
A -OC-Ar-CO-
B -HN-Ar'-NH-
C

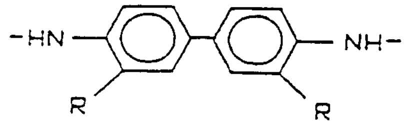

D

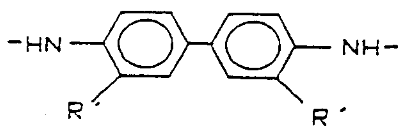

et jusqu'à 5 % en moles de motifs E et/ou F contenant des liaisons méta, dérivés d'acides dicarboxyliques aromatiques (E') et/ou de diamines aromatiques (F'), où les sommes des fractions molaires des motifs A + E et des fractions molaires des motifs B + C + D + F sont essentiellement de même importance,
-Ar- et -Ar'- représentent des restes aromatiques divalents dont les liaisons de valence sont en position para ou dans des positions comparables coaxiales ou parallèles et qui peuvent être substitués par un ou deux restes inertes tels qu'alkyle de 1 à 4 atomes de carbone ou halogène, et
-R représente un reste alkyle de 1 à 4 atomes de carbone, -R' représente un reste alcoxy de 1 à 4 atomes de carbone, et les proportions des constituants diamine B, C et D se trouvent, par rapport à la quantité totale de ces constituants diamine, à l'intérieur des limites suivantes:
motif B: 20-30 % en moles
motif C: 35-55 % en moles
motif D: 15-40 % en moles.

2. Copolyamides selon la revendication 1, caractérisés en ce que -Ar- est 1,4-phénylène, 1,4-, 1,5- ou 2,6-naphtylène ou 1,4-diphénylène et
-Ar'- est 1,4-phénylène, 1,4-, 1,5- ou 2,6-napntylène.

3. Copolyamides selon au moins l'une des revendications 1 et 2, caractérisés en ce que -Ar- et -Ar'- sont des restes 1,4-phénylène, qui ne sont pas substitués ou qui sont substitués par un reste alkyle de 1 à 4 atomes de carbone ou par un atome d'halogène.

4. Copolyamides selon au moins l'une des revendications 1 à 3, caractérisés en ce que -Ar- et -Ar'- sont des restes 1,4-phénylène qui ne sont pas substitués ou qui sont substitués par un groupe méthyle ou un atome de chlore.

5. Copolyamides selon au moins l'une des revendications 1 à 4, caractérisés en ce que -Ar- et -Ar'- sont des restes 1,4-phénylène non substitués.

6. Copolyamides selon au moins l'une des revendications 1 à 5, caractérisés en ce que -R est un reste alkyle de 1 à 2 atomes de carbone, et -R' est un reste alcoxy de 1 à 2 atomes de carbone.

7. Copolyamides selon au moins l'une des revendications 1 à 6, caractérisés en ce que -R est méthyle et -R' est méthoxy.

8. Copolyamides selon au moins l'une des revendications 1 à 7, caractérisés en ce que le motif contenant des liaisons méta est le reste divalent du 3,4'- ou 3',4-diaminobenzanilide.

9. Copolyamides selon au moins l'une des revendications 1 à 8, caractérisés en ce que les proportions des constituants diamine B, C et D se trouvent, par rapport à la quantité totale des constituants diamine, a l'intérieur des limites suivantes:
diamine B: 25-30 % en moles
diamine C: 40-50 % en moles
diamine D: 25-30 % en moles.

10. Procédé de préparation des copolyamides aromatiques de la revendication 1 par polycondensation d'un chlorure d'acide dicarboxylique avec des diamines aromatiques dans un solvant organique aprotique polaire du type amide, éventuellement en présence d'un halogénure alcalin ou alcalino-terreux, à une température élevée, caractérisé en ce qu'on fait réagir 95 à 100 % en moles de chlorures d'acides de formule

Cl-OC-Ar-CO-Cl (A')

et 0 à 5 % en moles de dichlorures d'acides dicarboxyliques aromatiques (E') contenant des liaisons méta, avec une quantité équivalente d'un mélange de diamines qui est constitué par 95-100 % en moles d'un mélange de diamines composé de 20-30 % en moles de diamines de formule

$NH_2$-Ar'-$NH_2$ (B')

de 35-55 % en modes de diamines de formule

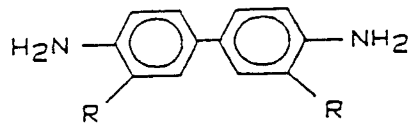

(C´)

et de 15-40 % en modes de diamines de formule

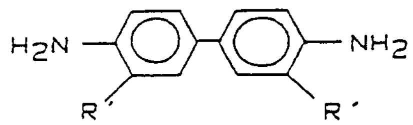

(D´)

et par 0 à 5 % en moles de diamines aromatiques (F') contenant des liaisons méta.

**11.** Procédé selon la revendication 10, caractérisé en ce qu'on fait réagir un mélange de diamines qui présente la composition suivante:
25-30 % en moles de B',
40-50 % en moles de C',
25-30 % en modes de D'.

**12.** Produits façonnés tels que des fils, des fibres, de la pulpe de fibres, des feuilles et des membranes en copolyamide aromatique du type acide dicarboxylique-diamine, caractérisés en ce que la matière façonnée est un copolyamide aromatique selon la revendication 1.